# EUROPEAN PATENT APPLICATION

(11) **EP 4 597 642 A1**
(43) Date of publication of application: **06.08.2025**
(21) Application number: 23927912.8
(22) Date of filing: 17.03.2023
(51) Int. Cl.: H01M 4/66, H01M 4/134, H01M 10/052

(54) **CURRENT COLLECTOR AND PREPARATION METHOD THEREFOR, ELECTRODE PLATE, SECONDARY BATTERY AND ELECTRIC DEVICE**

(71) Applicant: Contemporary Amperex Technology (Hong Kong) Limited, Central (HK)
(72) Inventor: GUAN, Wenhao, Ningde, Fujian 352100 (CN); FAN, Yulei, Ningde, Fujian 352100 (CN); GE, Xiaoming, Ningde, Fujian 352100 (CN); ZHONG, Wei, Ningde, Fujian 352100 (CN)
(74) Representative: Ziebig Hengelhaupt Intellectual Property Attorneys Patentanwaltskanzlei PartGmbB
(86) International application number: PCT/CN2023/082336
(87) International publication number: WO 2024/192593

(57) **Abstract**

Disclosed are a current collector (40) and a method for preparing same, an anode plate comprising the current collector (40), a secondary battery (100), and an electric device (1000). The current collector (40) includes a porous three-dimensional framework (402) and a lithiophilic substance (404), where the lithiophilic substance (404) is distributed in pores of the porous three-dimensional framework (402). The current collector (40) includes a first side used to face the separator, and a second side facing away from the first side. In a direction from the first side to the second side, the porous three-dimensional framework (402) includes a first part and a second part, the thickness of the lithiophilic substance (404) in the pores of the first part being less than the thickness of the lithiophilic substance (404) in the pores of the second part. The thickness of the lithiophilic substance (404) in the current collector (40) gradually increases in a thickness direction of the porous three-dimensional framework (402), which may induce preferential deposition of a lithium metal in the second part of the porous three-dimensional framework (402), so as to limit the infinite volume expansion of deposited lithium by fully utilizing the pores of the three-dimensional current collector (40).

## Description

### TECHNICAL FIELD

The present application relates to the technical field of batteries, and in particular, to a current collector and a preparation method therefor, an electrode plate, a secondary battery, and an electric device.

### BACKGROUND

The secondary battery can enhance the power endurance of the battery, greatly improve the economic efficiency of power storage, promote the upgrade of consumer electronic products, and is of great significance to human life. In order to improve the performance of the secondary battery, particularly a lithium metal battery, a current collector generally employs a metal framework. However, the lithiophilic sites of the metal framework are insufficient, the lithium nucleation overpotential is large, and at present, the lithium metal adopts a localized nucleation mode on the surface of the current collector and tends to be preferentially deposited on the surface, causing loose lithium deposition on the surface of the current collector, holes in the current collector cannot be used, thereby causing problems such as severe volume expansion in the cycling process of the secondary battery, rapid growth of dendrites, and even the safety risk of short circuit caused by direct penetration of dendrites into the separator.

Therefore, how to provide a current collector, a method for preparing same, an anode plate, a secondary battery, and an electric device to reduce the lithium nucleation overpotential, increase the lithium active sites, improve the diffusion capability of lithium atoms on the surface of the current collector, suppress lithium dendrites and volume expansion in the cycling process of the secondary battery, and improve the cycling performance and safety of the secondary battery is an urgent problem to be solved presently.

### SUMMARY

In view of the above problems, the present application provides a current collector and a method for preparing same, an anode plate, a secondary battery, and an electric device to solve the above technical problems in the secondary battery.

In a first aspect, the present application provides a current collector, including a porous three-dimensional framework and a lithiophilic substance, where the lithiophilic substance is distributed in pores of the porous three-dimensional framework, and the mass proportion of the lithiophilic substance in the current collector on the side close to a separator is less than the mass proportion of the lithiophilic substance in the current collector on the side close to an electrode.

In the technical solution of the embodiment of the present application, by disposing the lithiophilic substance in the pores of the porous three-dimensional framework, the nucleation overpotential of lithium on the surface of the porous three-dimensional framework can be reduced, the active sites can be increased, the diffusion capability of lithium atoms on the surface of the porous three-dimensional framework can be improved, the localized nucleation and deposition of lithium metal can be avoided, the formation of dendrites can be suppressed, and the cycle performance and safety of the secondary battery can be improved. Furthermore, the mass proportion of the lithiophilic substance in the current collector on the side close to the separator is less than the mass proportion of the lithiophilic substance in the current collector on the side close to the electrode, and the lithiophilic substance increases in gradient from the side closer to the separator to the electrode, which may induce preferential deposition of lithium metal in the porous three-dimensional framework, make full use of the pores of the three-dimensional current collector, limit infinite volume expansion of the deposited lithium, and further improve the safety of the secondary battery.

**In** some embodiments, the lithiophilic substance is distributed in the pores of the porous three-dimensional framework; the current collector includes a first side used to face the separator, and a second side facing away from the first side; and in a direction from the first side to the second side, the porous three-dimensional framework includes a first part and a second part, a first lithiophilic substance layer is provided in the pores of the first part of the three-dimensional framework, a second lithiophilic substance layer is provided in the pores of the second part of the three-dimensional framework, and the thickness of the first lithiophilic substance layer is less than the thickness of the second lithiophilic substance layer.

In the technical solution of the embodiment of the present application, the thickness of the first lithiophilic substance layer in the first part of the hole is less than the thickness of the second lithiophilic substance layer in the second part of the hole, and the thickness of the lithiophilic substance in the current collector increases in gradient from the separator side to the electrode side, so that lithium metal is preferentially deposited in the porous three-dimensional framework, the pores of the three-dimensional current collector are fully used, the infinite volume expansion of the deposited lithium is limited, and the safety of the secondary battery is further improved.

In some embodiments, the thickness of the second lithiophilic substance layer is greater than or equal to 50 nm and less than or equal to 1 µm, preferably 50-60 nm.

If the thickness of the second lithiophilic substance layer is too less, the lithiophilic effect is insignificant and the formation of lithium dendrites cannot be improved, and if the thickness of the second lithiophilic substance layer is too great, it is disadvantageous to alleviate the volume expansion of the secondary battery and the cost of the secondary battery increases.

In the technical solution of the embodiment of the present application, the thickness of the second lithiophilic substance layer is controlled to be greater than or equal to 50 nm and less than or equal to 1 µm, preferably 50-60 nm, so that the lithiophilic effect can be sufficiently exerted, the growth of lithium dendrites can be reduced, the short-circuiting of the battery can be at least partially avoided, the volumetric expansion of the secondary cell can be reduced, and the cycle performance and safety performance of the secondary battery can be improved.

In some embodiments, the thickness of the first lithiophilic substance layer is greater than 0 nm and less than 1 µm, preferably 8-12 nm.

In the technical solution of the embodiment of the present application, the thickness of the first lithiophilic substance layer in the pores of the first part is set to be greater than 0 nm and less than 1 µm, preferably 8-12 nm, so that the thickness of the lithiophilic substance increases in gradient from the first part to the second part. When the current collector is used, the first part is close to the separator and the second part is away from the separator, and when the current collector is wetted with an electrolyte, the lithium metal can be induced to be preferentially deposited in the porous three-dimensional framework, the pores of the three-dimensional current collector are fully used, the infinite volumetric expansion of the deposited lithium is limited, and the safety performance of the battery is further improved.

In some embodiments, the thickness of the first lithiophilic substance layer is d1, the thickness of the second lithiophilic substance layer is d2, and a range of d1 is greater than 0 and less than or equal to d2*50%.

In the technical solution of the embodiment of the present application, by controlling the percentages of the thickness of the first lithiophilic substance layer in the pores of the first part and the thickness of the second lithiophilic substance layer in the pores of the second part, the thickness of the lithiophilic substance increases in gradient from the first part to the second part. When the current collector is used, the first part is close to the separator and the second part is away from the separator, and when the separator is wetted with the electrolyte, the lithium metal can be induced to be preferentially deposited in the porous three-dimensional framework, the pores of the three-dimensional current collector are fully used, the infinite volume expansion of the deposited lithium is limited, and the battery safety performance is further improved.

In some embodiments, in the direction from the first side to the second side, a height of the first part is h1, a height of the current collector is h, and a range of h1 is greater than 5 µm and less than or equal to h*50%.

If the height of the first portion is too less, the gradient of the thickness of the lithiophilic substance throughout the porous three-dimensional framework does not change significantly, and if the height of the first portion is too great, the concentration of the lithiophilic substance throughout the porous three-dimensional framework is too less, which affects the lithiophilic effect. In the present application, the range of h₁ is controlled to be greater than 5 µm and less than or equal to h*50%, while ensuring the lithiophilic effect and the gradient change of the thickness of the lithiophilic substance in the porous three-dimensional framework.

In some embodiments, the lithiophilic substance includes at least one of a metal capable of forming an alloy with lithium, a metal alloy capable of forming an alloy with lithium, a metal capable of forming a solid solution with lithium, a metal alloy capable of forming a solid solution with lithium, silicon (Si), a carbon-based material, or an oxide.

In the technical solution of the embodiment of the present application, the metal, the metal alloy, silicon (Si), the carbon-based material, or the oxide lithiophilic substance has a better lithiophilic effect, can induce lithium deposition in the pores of the porous three-dimensional framework well, and can effectively increase lithium deposition active sites, reduce the nucleation overpotential of lithium, reduce localized lithium nucleation, reduce the formation of lithium dendrites, and improve the safety performance of the secondary battery. Moreover, the conductivity of the metal and the carbon-based material is good, which contributes to reducing the impedance of the secondary battery and improving the first coulombic efficiency of the secondary battery.

In some embodiments, the metal includes at least one of Sn, Mg, Zn, Bi, Pb, Au, Ag, Al, In, and Ga; the metal alloy comprises at least two of Sn, Mg, Zn, Bi, Pb, Au, Ag, Al, In, and Ga; the carbon-based material includes at least one of graphite, graphene, graphdiyne, and hard carbon; and the oxide includes at least one of Cu₂O, CuO, ZnO, MgO, and graphene oxide.

In the technical solution of the embodiment of the present application, all of the above substances have good lithiophilicity, can induce lithium deposition in the pores of the porous three-dimensional framework well, and can effectively increase lithium deposition active sites, reduce the nucleation overpotential of lithium, reduce localized lithium nucleation, reduce the formation of lithium dendrites, and improve the safety performance of the secondary battery.

Moreover, Sn, Mg, Zn, Bi, Pb, Au, Ag, Al, In, Ga, graphite, graphene, graphdiyne, and hard carbon have good conductivity, which contributes to reducing the impedance of the secondary battery, improving the first coulombic efficiency of the secondary battery, and reducing the cost of the secondary battery.

In some embodiments, the metal includes at least one of Sn, Mg, and Zn, and the metal alloy comprises at least two of Sn, Mg, and Zn.

In the technical solution of the embodiment of the present application, since the metals Sn, Mg and Zn have a stable structure, they are less likely to collapse, thereby increasing the structural stability of the secondary battery.

In some embodiments, a loading capacity of the lithiophilic substance in the pores of the porous three-dimensional framework is greater than or equal to 0.3g/m² and less than or equal to 60 g/m².

If the loading capacity of the lithiophilic substance is too less, the lithiophilic substance cannot cover the pore surface of the porous three-dimensional framework, and the lithiophilic effect is insignificant. If the loading capacity of the lithiophilic substance is too great, the cost increases. In the technical solution of the embodiment of the present application, by controlling the loading capacity of the lithiophilic substance in the pores of the porous three-dimensional framework to be greater than or equal to 0.3g/m² and less than or equal to 60 g/m², the lithiophilic substance covers the pore surfaces of the porous three-dimensional framework, and the lithiophilic effect is significant.

In some embodiments, the porous three-dimensional framework includes a porous three-dimensional metal framework.

In the technical solution of the embodiment of the present application, the metal framework is stable to a corrosive liquid such as nitric acid and hydrochloric acid, and the metal has good conductivity, high surface smoothness, easy cleaning, and low process difficulty.

In some embodiments, a material of the porous three-dimensional metal framework includes at least one of Cu, Ni, Ti, Mg, and Al.

In the technical solution of the embodiment of the present application, the metals Cu, Ni, Ti, Mg, and Al are stable to the corrosive liquid such as nitric acid and hydrochloric acid, and are not corroded in the process of corroding the lithiophilic substance. Moreover, Cu, Ni, Ti, Mg, and Al are low in cost, so that the manufacturing cost of the secondary battery can be reduced.

In some embodiments, a porosity of the porous three-dimensional framework is 60-90%.

If the porosity of the porous three-dimensional framework is too less, for example, <60%, it is hardly wetted with the electrolyte, so that lithium ions cannot be induced to be deposited into the pores in the porous three-dimensional framework, and if the porosity of the porous three-dimensional framework is too great, for example, >90%, the area of an edge filament is insufficient, the electrochemically active area is decreased, and the lithium ions can not be induced to be deposited into the pores in the porous three-dimensional framework as well.

In the technical solution of the embodiment of the present application, the porosity of the porous three-dimensional framework is controlled to be 60-90%, so as to not only ensure good wetting of the electrolyte but also make the electrochemically active area sufficient, thereby inducing the lithium ions to be deposited into the pores in the porous three-dimensional framework.

In a second aspect, the present application provides a method for preparing the current collector according to any one of embodiments, including:
providing a porous three-dimensional framework, wherein the porous three-dimensional framework comprises a first side used to face a separator and a second side facing away from the first side; and
forming a lithiophilic substance on the porous three-dimensional framework, wherein in a direction from the first side to the second side, the obtained lithiophilic porous three-dimensional framework includes a first part and a second part, and the thickness of a first lithiophilic substance layer in pores of the first part is less than the thickness of a second lithiophilic substance layer in pores of the second part.

In the technical solution of the embodiment of the present application, the lithiophilic subtance is formed in the inner pores of the porous three-dimensional framework, so that the lithium nucleation overpotential can be reduced, the lithium active sites can be increased, the diffusion capability of lithium atoms on the surface of the current collector framework can be improved, the growth of lithium dendrites can be suppressed, and the cycle performance and safety performance of the secondary battery can be improved. Furthermore, this preparation method can realize the design of the thickness gradient of the lithiophilic substance layer in the current collector in the direction from the separator side to the electrode side, which may induce the lithium metal to be preferentially deposited into the pores in the porous three-dimensional framework, make full use of the pores of the three-dimensional current collector, limit the infinite volume expansion of lithium metal, and further improve the safety performance of the secondary battery.

In some embodiments, a method of preparing a current collector includes:
placing the first part of the lithiophilic porous three-dimensional framework in a corrosive liquid to be impregnated, such that the thickness of the first lithiophilic substance layer in the pores of the first part is less than the thickness of the second lithiophilic substance layer in the pores of the second part, so as to obtain the current collector containing the lithiophilic substance.

In the technical solution of the embodiment of the present application, by etching the lithiophilic substance in the first part of the porous three-dimensional framework, the preparation method can realize the thickness gradient design of the lithiophilic substance layer in the current collector in the direction from the separator side to the electrode side, which may induce the lithium metal to be preferentially deposited into the pores in the porous three-dimensional framework, make full use of the pores of the three-dimensional current collector, limit the infinite volume expansion of the lithium metal, and further improve the safety performance of the secondary battery.

In some embodiments, the corrosive liquid includes at least one of nitric acid or hydrochloric acid.

In the technical solution of the embodiment of the present application, both nitric acid and hydrochloric acid corrode only the lithiophilic substance, and do not corrode the porous three-dimensional framework of Cu, Ni, Ti, Mg, and Al, and by impregnating the first part of the porous three-dimensional framework in nitric acid or hydrochloric acid, the thickness gradient design of the lithiophilic substance layer in the current collector in the direction from the separator side to the electrode side can be realized. Moreover, nitric acid or hydrochloric acid has less environmental pollution and lower cost, thereby reducing the preparation cost of the current collector.

In some embodiments, the first part of the porous three-dimensional framework is placed in the corrosive liquid to be impregnated for 1 to 60 min.

If the first part of the porous three-dimensional framework is placed in the etching solution to be impregnated for too short a period of time, the lithiophilic substance in the pores of the first part is not sufficiently corroded, resulting in insignificant gradients of the thickness of the first lithiophilic substance layer and the thickness of the second lithiophilic substance layer in the pores of the second part; on the other hand, if the impregnating time is too long, the thickness of the first lithiophilic substance layer in the pores of the first part is too less to completely cover the surface of the pores of the first part, and the lithiophilic effect is insignificant. In the technical solution of the embodiment of the present application, the first part of the porous three-dimensional framework is controlled to be impregnated in the corrosive liquid for 1-60 min, and under a circumstance that the thickness gradient of the lithiophilic substance in the current collector is ensured in the direction from the separator side to the electrode side, the lithiophilic effect is more significant.

In a third aspect, the present application provides an electrode plate, including the current collector as described above or the current collector prepared by the method for preparing the current collector as described above.

In a fourth aspect, the present application provides a secondary battery, including an anode plate, a cathode plate, and a separator, where the separator is provided between the anode plate and the cathode plate, the anode plate is the positive electrode as described above, a first part of a current collector in the anode plate is close to the separator, and a second part is away from the separator.

In a fourth aspect, the present application provides an electric device, including the secondary battery as described above.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

To describe the technical solutions in the embodiments of the present application more clearly, the following briefly describes the accompanying drawings needed for the embodiments of the present application. Clearly, the accompanying drawings described below are merely some embodiments of the present application. Those of ordinary skill in the art can still derive other accompanying drawings from these accompanying drawings without exerting creative efforts.
FIG. 1 is a schematic structural diagram of an electric device according to some embodiments of the present application;
FIG. 2 is a schematic diagram of a decomposed structure of a battery according to some embodiments of the present application;
FIG. 3 is a schematic diagram of a decomposed structure of a battery cell according to some embodiments of the present application;
FIG. 4 is a schematic diagram of a thickness d1 of a first lithiophilic substance layer, a thickness d2 of a second lithiophilic substance layer, and a proportion between a height h1 of a first part and a height h of a current collector according to some embodiments of the present application; and
FIG. 5 is a schematic cross-sectional view of a current collector prepared in an embodiment.

In the drawings, the figures are not drawn to actual scale.

Description of numerals: electric device 1000;
battery 100, controller 200, motor 300;
box body 10, first part 11, second part 12;
battery cell 20, end cap 21, electrode terminal 21a, case 22, cell assembly 23, tab 23a, functional component 24;
current collector 40, porous three-dimensional framework 402, lithiophilic substance 404.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

At present, in view of the development of the market, the use of power batteries is becoming increasingly more widespread. Power batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of power batteries continues to expand, a market demand for power batteries continues to increase.

The secondary battery can enhance the power endurance of the battery, greatly improve the economic efficiency of power storage, promote the upgrade of consumer electronic products, and is of great significance to human life. In order to improve the performance of the secondary battery, particularly a lithium metal battery, a current collector generally employs a metal framework. However, the lithiophilic sites of the metal framework are insufficient, the lithium nucleation overpotential is large, and at present, the lithium metal adopts a localized nucleation mode on the surface of the current collector and tends to be preferentially deposited on the surface, causing loose lithium deposition on the surface of the current collector, holes in the current collector cannot be used, thereby causing problems such as severe volume expansion in the cycling process of the secondary battery, rapid growth of dendrites, and even the safety risk of short circuit caused by direct penetration of dendrites into the separator.

In order to solve the above-mentioned technical problems of the secondary battery, it has been found that research can be conducted from a current collector.

The present application designs a current collector and a method for preparing same, an electrode plate, a secondary battery, and an electric device. By depositing a lithiophilic substance in pores of a porous three-dimensional framework and increasing a thickness gradient of the lithiophilic substance in the pores in a direction from a separator side to an electrode side, nucleation overpotential of lithium on a surface of the porous three-dimensional framework can be reduced, active sites can be increased, the diffusion ability of lithium atoms on the surface of the porous three-dimensional framework can be improved, the localized nucleation deposition of lithium metal can be avoided, the dendrite formation can be suppressed, and the cycle performance and safety of the secondary battery can be improved. Furthermore, in the direction from the separator side to the electrode side, the increasing thickness gradient of the lithiophilic substance can induce the lithium metal to be preferentially deposited into the porous three-dimensional framework, make full use of the pores of the three-dimensional current collector, limit the infinite volume expansion of the deposited lithium, and further improve the safety of the secondary battery.

Based on the above considerations, in order to solve the problems such as severe dendritic growth and volume expansion of the secondary battery, the inventors have intensively studied to design a current collector, including a porous three-dimensional framework and a lithiophilic substance, where the lithiophilic substance is distributed in the pores of the porous three-dimensional framework, and the mass proportion of the lithiophilic substance in the current collector on the side close to the separator is less than the mass proportion of the lithiophilic substance in the current collector on the side close to the electrode.

By disposing the lithiophilic substance in the pores of the porous three-dimensional framework, the nucleation overpotential of lithium on the surface of the porous three-dimensional framework can be reduced, the active sites can be increased, the diffusion capability of lithium atoms on the surface of the porous three-dimensional framework can be improved, the localized nucleation deposition of lithium metal can be avoided, the formation of dendrites can be suppressed, and the cycle performance and safety of the secondary battery can be improved. Furthermore, the mass proportion of the lithiophilic substance in the current collector on the side close to the separator is less than the mass proportion of the lithiophilic substance in the current collector on the side close to the electrode, and the lithiophilic substance increases in gradient from the side closer to the separator to the electrode, which may induce preferential deposition of lithium metal in the porous three-dimensional framework, make full use of the pores of the three-dimensional current collector, limit infinite volume expansion of the deposited lithium, and further improve the safety of the secondary battery.

The current collector disclosed in the embodiments of the present application can be applied to a battery cell, and the battery cell can be used in an electric device using a battery as a power supply or various energy storage systems using a battery as an energy storage component. The electric device can be, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate the description, in the following embodiments, as an example for description, an electric device in an embodiment of the present application is a vehicle 1000.

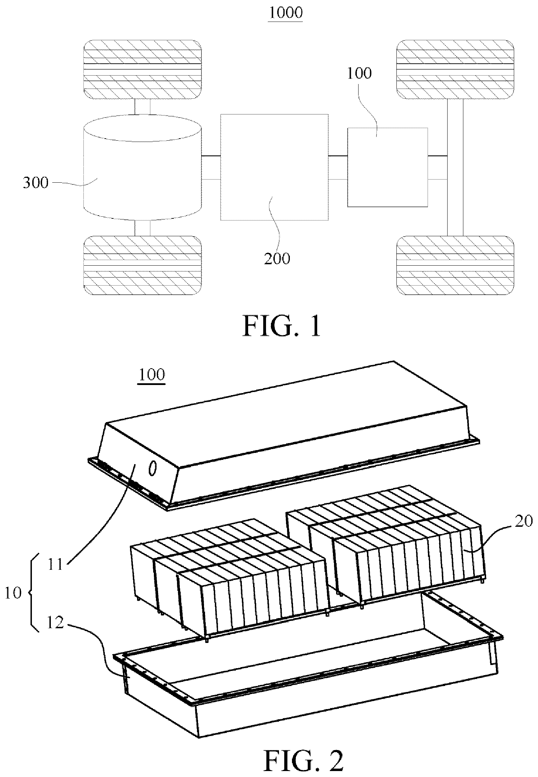

Referring to FIG. 1, FIG. 1 is a schematic structural diagram of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the electric device 1000, a battery 100 is provided, and the battery 100 may be provided at the bottom, head, or tail of the electric device 1000. The battery 100 may be used to power the electric device 1000, for example, the battery 100 may be used as an operating power supply of the electric device 1000. The electric device 1000 may further include a controller 200 and a motor 300, and the controller 200 is used to control the battery 100 to power the motor 300, for example, used for a working power requirement during starting, navigating, and driving the electric device 1000.

In some embodiments of the present application, the battery 100 may be used not only as the operating power supply of the electric device 1000, but also as a driving power supply of the electric device 1000, instead of or partially instead of fuel or natural gas to provide driving power for the electric device 1000.

Referring to FIG. 2, FIG. 2 is a schematic diagram of a decomposed structure of a battery 100 according to some embodiments of the present application. The battery 100 includes a box 10 and a battery cell 20. The battery cell 20 is accommodated in the box 10. Here, the box 10 is used for providing an accommodation space for the battery cell 20, and the box 10 may have various structures. In some embodiments, the box body 10 may include a first part 11 and a second part 12, and the first part 11 and the second part 12 fit to each other to define an accommodation space for accommodating the battery cell 20. The second part 12 may be a hollow structure with an opening at one end, the first part 11 may be a plate-shaped structure, and the first part 11 covers an opening side of the second part 12, so that the first part 11 and the second part 12 jointly define the accommodation space. The first part 11 and the second part 12 each may be a hollow structure with an opening at one end, and an opening side of the first part 11 covers an opening side of the second part 12. Of course, the box body 10 formed by the first part 11 and the second part 12 may be in various shapes such as cylinder, cuboid, and the like.

In the battery 100, a plurality of battery cells 20 may be provided, and the plurality of battery cells 20 may be subjected to series connection, parallel connection, or series-parallel connection. The series-parallel connection means that the plurality of battery cells 20 are subjected to both series connection and parallel connection. The plurality of battery cells 20 may be subjected to series connection, parallel connection, or series-parallel connection directly, and then an integration formed by the plurality of battery cells 20 is accommodated in the box 10. Certainly, the battery 100 may be alternatively a battery module formed by integrating the plurality of battery cells 20 by series connection, parallel connection, or series-parallel connection, and then a plurality of battery modules are integrated by series connection, parallel connection, or series-parallel connection, and accommodated in the box 10. The battery 100 may further include other structures. For example, the battery 100 may further include a current converging component for implementing an electrical connection between the plurality of battery cells 20.

Here, each battery cell 20 may be a secondary battery, or may be a lithium-sulfur battery, a lithium-ion battery, or a lithium metal battery, but is not limited thereto. The battery cell 20 may be in the shape of cylinder, flat body, rectangular cuboid, etc.

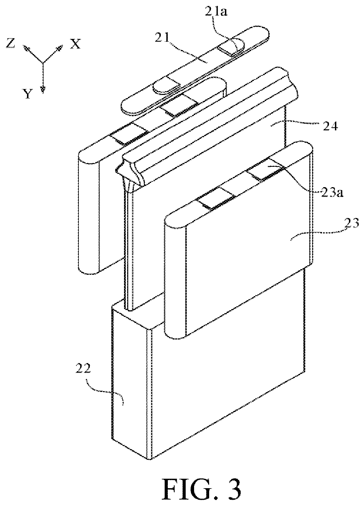

Referring to FIG. 3, FIG. 3 is a schematic diagram of a decomposed structure of a battery cell 20 according to some embodiments of the present application. The battery cell 20 refers to a minimum unit constituting a battery. As shown in FIG. 3, the battery cell 20 includes an end cap 21, a case 22, a battery cell component 23 and another functional component 24.

The end cap 21 is a component that covers the opening of the case 22 to insulate an internal environment of the battery cell 20 from an external environment. Without limitation, the shape of the end cap 21 may adapt to the shape of the case 22 to fit the case 22. In some embodiments, the end cap 21 may be made of a material with certain hardness and strength (e.g., aluminum alloy). As such, the end cap 21 is less prone to deformation under compressive impact, thereby enabling the battery cell 20 to have higher structural strength and improved safety performance. The end cap 21 may be provided with a functional component such as an electrode terminal 21a. The electrode terminal 21a may be configured to be electrically connected to the electrode assembly 23 for outputting or inputting electrical energy of the battery cell 20. In some embodiments, a pressure relief mechanism for relieving internal pressure may be further disposed on the end cap 21 when the internal pressure or temperature of the battery cell 20 reaches a threshold value. The end cap 21 may be made of various materials, such as copper, iron, aluminum, stainless steel, aluminum alloy, plastic, etc. The embodiments of the present application impose no special limitations thereto. In some embodiments, an insulation piece may be further disposed on an inner side of the end cap 21, and the insulation piece may be used to isolate an electrical connection component in the case 22 from the end cap 21 to reduce a risk of a short circuit. For example, the insulation piece may be plastic, rubber, etc.

The case 22 is a component configured to cooperate with the end cap 21 to form an internal environment of the battery cell 20, where the formed internal environment may be used to accommodate the electrode assembly 23, an electrolyte, and other components. The case 22 and the end cap 21 may be separate members, and an opening may be provided in the case 22, and the inner environment of the battery cell 20 may be formed by closing the end cap 21 at the opening. Without limitation, the end cap 21 and the case 22 may also be integrated. Specifically, the end cap 21 and the case 22 may form a joint connection surface before other components are fitted into the case, and then the end cap 21 is enabled to cover the case 22 when an interior of the case 22 needs to be enclosed. The case 22 may be in various shapes and various dimensions, such as cuboid, cylinder, hexagonal prism, and the like. Specifically, the shape of the case 22 may be determined based on a specific shape and dimension of the electrode assembly 23. The case 22 may be made of various materials, such as copper, iron, aluminum, stainless steel, aluminum alloy, plastic, and the like. This is not specially limited in the embodiments of the present application.

The electrode assembly 23 is a component in the battery cell 100 in which an electrochemical reaction occurs. The case 22 may include one or more electrode assemblies 23. The electrode assembly 23 is mainly formed by winding or stacking a cathode plate and an anode plate, and a separator is generally provided between the anode plate and the cathode plate. Parts of the cathode plate and the anode plate with an active material constitute a main body of the electrode assembly, and parts of the anode plate and the cathode plate without active material each constitutes a tab 23a. A cathode tab and an anode tab may both be located at one end of the main body portion or be located at two ends of the main body portion respectively. In a charging/discharging process of a battery, an active material of the cathode and an active material of the anode react with the electrolyte, and the tab 23a is connected to the electrode terminal to form a current circuit.

According to some embodiments of the present application, the present application provides a current collector, including a porous three-dimensional framework and a lithiophilic substance, where the lithiophilic substance is distributed in pores of the porous three-dimensional framework, and the mass proportion of the lithiophilic substance in the current collector on the side close to a separator is less than the mass proportion of the lithiophilic substance in the current collector on the side close to an electrode.

The porous three-dimensional framework includes a plurality of pores, and the pores are uniformly distributed inside the porous three-dimensional framework. The size and shape of the pores may be selected according to practical requirements, and the size and shape of the plurality of pores may be same or different. By way of example, the pores include, but are not limited to, micropores and the like.

The mass proportion of the lithiophilic substance in the current collector on the separator side refers to the proportion of the mass of the lithiophilic substance in the pores of the current collector on the separator side to the mass of the lithiophilic substance in the entire pores of the current collector, and the mass proportion of the lithiophilic substance in the current collector on the electrode side refers to the proportion of the mass of the lithiophilic substance in the pores of the current collector on the electrode side to the mass of the lithiophilic substance in the entire pores of the current collector.

By disposing the lithiophilic substance in the pores of the porous three-dimensional framework, the nucleation overpotential of lithium on the surface of the porous three-dimensional framework can be reduced, the active sites can be increased, the diffusion capability of lithium atoms on the surface of the porous three-dimensional framework can be improved, the localized nucleation deposition of lithium metal can be avoided, the formation of dendrites can be suppressed, and the cycle performance and safety of the secondary battery can be improved. Furthermore, the mass proportion of the lithiophilic substance in the current collector on the side close to the separator is less than the mass proportion of the lithiophilic substance in the current collector on the side close to the electrode, and the lithiophilic substance increases in gradient from the side closer to the separator to the electrode, which may induce preferential deposition of lithium metal in the porous three-dimensional framework, make full use of the pores of the three-dimensional current collector, limit infinite volume expansion of the deposited lithium, and further improve the safety of the secondary battery.

According to some embodiments of the present application, the lithiophilic substance is distributed in the pores of the porous three-dimensional framework; the current collector includes a first side used to face the separator, and a second side facing away from the first side; and in a direction from the first side to the second side, the porous three-dimensional framework includes a first part and a second part, a first lithiophilic substance layer is provided in the pores of the first part of the three-dimensional framework, a second lithiophilic substance layer is provided in the pores of the second part of the three-dimensional framework, and the thickness of the first lithiophilic substance layer is less than the thickness of the second lithiophilic substance layer.

In the direction from the first side to the second side, the porous three-dimensional framework includes a first part and a second part. For example, in some embodiments, in the direction from the first side to the second side, the porous three-dimensional framework may also include a first part, a second part, a third part, a fourth part, and the like, as long as it is ensured that the thickness of the layer of the lithiophilic substance increases in gradient in the direction from the first side to the second side.

The thickness of the first lithiophilic substance layer in the pores of the first part is less than the thickness of the second lithiophilic substance layer in the pores of the second part, and the thickness gradient of the lithiophilic substance in the current collector from the separator side to the electrode side increases, to induce the lithium metal to be preferentially deposited in the porous three-dimensional framework, the pores of the three-dimensional current collector are fully used, the infinite volume expansion of the deposited lithium is limited, and the safety of the secondary battery is further improved.

According to some embodiments of the present application, the thickness of the second lithiophilic substance layer is greater than or equal to 50 nm and less than or equal to 1 µm, preferably 50-60 nm.

As an example, the thickness of the second lithiophilic substance layer may be 55 nm, 75 nm, 100 nm, 300 nm, 450 nm, 650 nm, 900 nm, 990 nm, and the like, or may be 55-75 nm, 75-100 nm, 100 -300 nm, 300-450 nm, 450-650 nm, 650-900 nm, 900-990 nm, and the like.

If the thickness of the second lithiophilic substance layer is too less, the lithiophilic effect is insignificant and the formation of lithium dendrites cannot be improved, and if the thickness of the second lithiophilic substance layer is too great, it is disadvantageous to alleviate the volume expansion of the secondary battery and the cost of the battery increases. Therefore, by controlling the thickness of the second lithiophilic substance layer to be greater than or equal to 50 nm and less than or equal to 1 µm, preferably 50-60 nm, the lithiophilic effect can be sufficiently exerted, the growth of lithium dendrites is alleviated, short-circuiting is at least partially avoided, the volumetric expansion of the secondary cell is alleviated, and the cycle performance and safety of the secondary battery are improved.

According to some embodiments of the present application, the thickness of the first lithiophilic substance layer is greater than 0 nm and less than 1 µm, preferably 8-12 nm.

As an example, the thickness of the first lithiophilic substance layer may be 0.1 nm, 0.6 nm, 5 nm, 50 nm, 100 nm, 300 nm, 450 nm, 650 nm, 900 nm, and the like; and may also be 0.1 to 0.6 nm, 0.6-5 nm, 5-50 nm, 50-100 nm, 100-300 nm, 300-450 nm, 450-650 nm, 650-900 nm, and the like.

The thickness of the first the thickness of the first lithiophilic substance layer is set at more than 0 nm and less than 1 µm, preferably 8-12 nm, so that the lithiophilic substance increases in gradient from the first part to the second part, when the current collector is used, the first part is close to the separator and the second part is away from the separator, and when the electrolyte is wet, lithium may be preferentially deposited in the porous three-dimensional framework, and the pores of the three-dimensional current collector are fully utilized, limiting the infinite volumetric expansion of the deposited lithium, and further improving the safety performance of the cell.

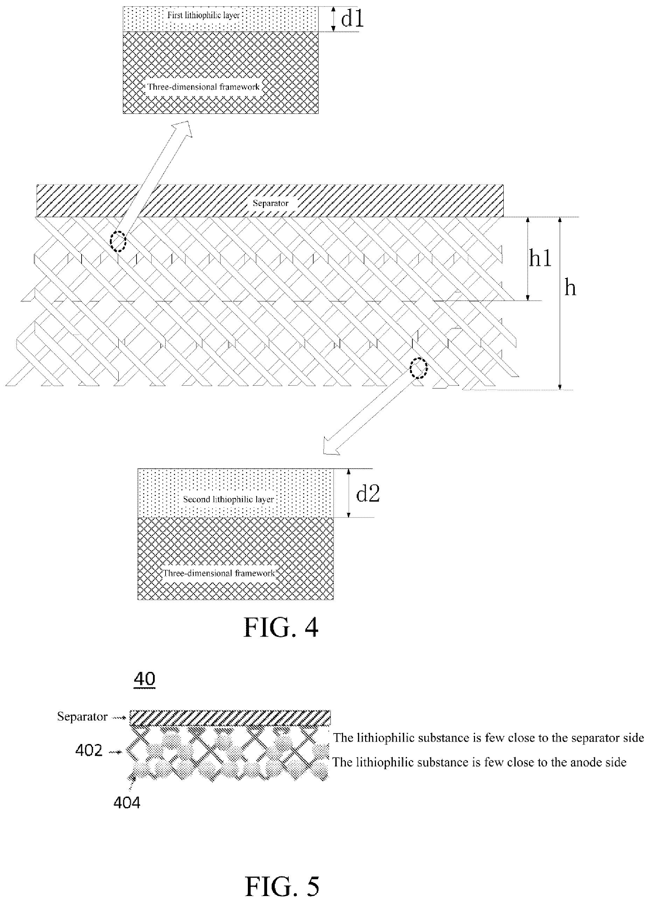

Referring to FIG. 4, according to some embodiments of the present application, the thickness of the first lithiophilic substance layer is d1, the thickness of the second lithiophilic substance layer is d2, and the range of d1 is greater than 0 and less than or equal to d2*50%.

By controlling the percentage of the thickness of the first lithiophilic substance layer in the pores of the first part and the thickness of the second lithiophilic substance layer in the pores of the second part, so that the lithiophilic substance increases in a gradient from the first part to the second part, when the current collector is used, the first part is close to the separator and the second part is distant from the separator, lithium metal may be induced to be preferentially deposited inside the porous three-dimensional framework when the electrolyte is wetted, the pores of the three-dimensional current collector are fully utilized, the unlimited volume expansion of the deposited lithium is limited, and the battery safety performance is further improved.

According to some embodiments of the present application, in the direction from the first side to the second side, the height of the first portion is h1 and the height of the current collector is h, h1 ranging from more than 5 µ m and less than or equal to h * 50%.

If the height of the first portion is too less, the gradient of the thickness of the lithiophilic substance throughout the porous three-dimensional framework does not change significantly, and if the height of the first portion is too great, the concentration of the lithiophilic substance throughout the porous three-dimensional framework is too less, which affects the lithiophilic effect. In the present application, the range of h₁ is controlled to be greater than 5 µm and less than or equal to h*50%, while ensuring the lithiophilic effect and the gradient change of the thickness of the lithiophilic substance in the porous three-dimensional framework.

According to some embodiments of the present application, the lithiophilic substance includes at least one of a metal capable of forming an alloy with lithium, a metal alloy capable of forming an alloy with lithium, a metal capable of forming a solid solution with lithium, a metal alloy capable of forming a solid solution with lithium, silicon (Si), a carbon-based material, or an oxide.

The above-mentioned lithiophilic substance has a better lithiophilic effect, can induce lithium to be deposited in the pores of the porous three-dimensional framework well, and may effectively increase lithium deposition active sites, reduce the nucleation overpotential of lithium, reduce the localized lithium nucleation, reduce the formation of lithium dendrites, and improve the safety performance of the secondary battery. Moreover, the conductivity of the metal and the carbon-based material is good, which contributes to reducing the impedance of the secondary battery and improving the first coulombic efficiency of the secondary battery.

According to some embodiments of the present application, the metal includes at least one of Sn, Mg, Zn, Bi, Pb, Au, Ag, Al, In, and Ga; the metal alloy includes at least two of Sn, Mg, Zn, Bi, Pb, Au, Ag, Al, In, and Ga; the carbon-based material includes at least one of graphite, graphene, graphdiyne, and hard carbon; and the oxide comprises at least one of Cu₂O, CuO, ZnO, MgO, and graphene oxide.

All of the above substances have good lithiophilicity, can induce lithium to be deposited in the pores of the porous three-dimensional framework well, and may effectively increase the lithium deposition active sites, reduce the nucleation overpotential of lithium, reduce the localized lithium nucleation, reduce the formation of lithium dendrites, and improve the safety performance of the secondary battery.

Moreover, Sn, Mg, Zn, Bi, Pb, Au, Ag, Al, In, Ga, graphite, graphene, graphdiyne, and hard carbon have good conductivity, which contributes to reducing the impedance of the secondary battery, improving the first coulombic efficiency of the secondary battery, and reducing the cost of the secondary battery.

According to some preferred embodiments of the present application, the metal includes at least one of Sn, Mg, and Zn, and the metal alloy includes at least two of Sn, Mg, and Zn.

Since the metals Sn, Mg, and Zn have a stable structure, they are unlikely to collapse, thereby increasing the structural stability of the secondary battery.

According to some embodiments of the present application, a loading capacity of the lithiophilic substance in the pores of the porous three-dimensional framework is greater than or equal to 0.3g/m² and less than or equal to 60 g/m².

If the loading capacity of the lithiophilic substance is too less, the lithiophilic substance cannot cover the pore surface of the porous three-dimensional framework, and the lithiophilic effect is insignificant. If the loading capacity of the lithiophilic substance is too great, the cost increases. In the technical solutions of the embodiments of the present application, the loading capacity of the lithiophilic substance in the pores of the porous three-dimensional framework is controlled to be greater than or equal to 0.3g/m² and less than or equal to 60 g/m², so that the lithiophilic substance covers the surface of the pores of the porous three-dimensional framework, and thus the lithiophilic effect is significant.

In some preferred embodiments, the loading capacity of the lithiophilic substance in the pores of the porous three-dimensional framework is greater than or equal to 0.5 g/m².

According to some embodiments of the present application, the porous three-dimensional framework includes a porous three-dimensional metal framework.

The metal framework is stable to a corrosive liquid such as nitric acid and hydrochloric acid, and the metal has good conductivity, high surface smoothness, easy cleaning, and low process difficulty.

The material of the porous three-dimensional metal framework may be a metal current collector material well known to those skilled in the art. According to some embodiments of the present application, the material of the porous three-dimensional metal framework includes at least one of Cu, Ni, Ti, Mg, Al.

The metals Cu, Ni, Ti, Mg, and Al are stable to the corrosive liquid such as nitric acid and hydrochloric acid, and are not corroded in the process of corroding the lithiophilic substance. Moreover, Cu, Ni, Ti, Mg, and Al are low in cost, so that the manufacturing cost of the secondary battery can be reduced.

According to some embodiments of this application, a porosity of the porous three-dimensional framework is 60-90%.

As an example, the porosity of the porous three-dimensional framework may be 60%, 65%, 70%, 75%, 80%, 85%, 90%, and the like; or may be 60-65%, 65-70%, 70-75%, 75-80%, 80-85%, 85-90%, and the like, and the porosity may be appropriately set as needed to satisfy the range of 60-90%.

If the porosity of the porous three-dimensional framework is too less, for example, <60%, it is hardly wetted with the electrolyte, so that lithium ions cannot be induced to be deposited into the pores in the porous three-dimensional framework, and if the porosity of the porous three-dimensional framework is too great, for example, >90%, the area of an edge filament is insufficient, the electrochemically active area is decreased, and the lithium ions can not be induced to be deposited into the pores in the porous three-dimensional framework as well. Therefore, the porosity of the porous three-dimensional framework is controlled to be 60-90%, so as to not only ensure good wetting of the electrolyte but also make the electrochemically active area sufficient, thereby inducing the lithium ions to be deposited into the pores in the porous three-dimensional framework.

According to some embodiments of the present application, the present application provides a method for preaoring the current collector, including:
providing a porous three-dimensional framework, wherein the porous three-dimensional framework comprises a first side used to face a separator and a second side facing away from the first side; and
forming a lithiophilic substance on the porous three-dimensional framework, wherein in a direction from the first side to the second side, the obtained lithiophilic porous three-dimensional framework includes a first part and a second part, and the thickness of a first lithiophilic substance layer in pores of the first part is less than the thickness of a second lithiophilic substance layer in pores of the second part.

By forming the lithiophilic substance in the inner pores of the porous three-dimensional framework, the lithium nucleation overpotential can be reduced, the lithium active sites may be increased, the diffusion capability of lithium atoms on the surface of the current collector framework may be improved, the growth of lithium dendrites may be suppressed, and the cycle performance and safety performance of the secondary battery may be improved. Furthermore, this preparation method can realize the design of the thickness gradient of the lithiophilic substance layer in the current collector in the direction from the separator side to the electrode side, which may induce the lithium metal to be preferentially deposited into the pores in the porous three-dimensional framework, make full use of the pores of the three-dimensional current collector, limit the infinite volume expansion of lithium metal, and further improve the safety performance of the secondary battery.

According to some embodiments of the present application, the method for preparing the current collector includes the following steps:
placing the first part of the lithiophilic porous three-dimensional framework in a corrosive liquid to be impregnated, such that the thickness of the first lithiophilic substance layer in the pores of the first part is less than the thickness of the second lithiophilic substance layer in the pores of the second part, so as to obtain the current collector containing the lithiophilic substance.

In this preparation method, the thickness gradient of the lithiophilic substance in the current collector can be designed in the direction from the separator side to the electrode side by etching the lithiophilic substance in the first part of the porous three-dimensional framework, which may induce the lithium metal to be preferentially deposited into the pores in the porous three-dimensional framework, make full use of the pores of the three-dimensional current collector, limit the infinite volume expansion of the lithium metal, and further improve the safety performance of the secondary battery. In addition, the method is simple to operate.

The method of depositing the lithiophilic substance layer in the pores of the porous three-dimensional framework includes, but is not limited to, physical vapor deposition (PVD), atomic layer deposition (ALD), electroplating, vacuum evaporation, or the like.

According to some embodiments of the present application, the corrosive liquid includes at least one of nitric acid and hydrochloric acid.

Both nitric acid and hydrochloric acid corrode only the lithiophilic substance, and do not corrode the porous three-dimensional framework of Cu, Ni, Ti, Mg, and Al, and by impregnating the first part of the porous three-dimensional framework in nitric acid or hydrochloric acid, the thickness gradient design of the lithiophilic substance layer in the current collector can be realized. Moreover, nitric acid or hydrochloric acid has less environmental pollution and lower cost, thereby reducing the preparation cost of the current collector. Of course, the corrosive liquid is not limited to nitric acid and hydrochloric acid, can be the lithiophilic substance and another corrosive liquid that does not corrode the porous three-dimensional framework.

The impregnating time of the first part of the porous three-dimensional framework in the corrosive liquid may be designed according to practical conditions. According to some preferred embodiments of the present application, the first part of the porous three-dimensional framework is impregnated in the corrosive liquid for 1-60 min.

If the first part of the porous three-dimensional framework is placed in the etching solution to be impregnated for too short a period of time, the lithiophilic substance in the pores of the first part is not sufficiently corroded, resulting in insignificant gradients of the thickness of the first lithiophilic substance layer and the thickness of the second lithiophilic substance layer in the pores of the second part; on the other hand, if the impregnating time is too long, the thickness of the first lithiophilic substance layer in the pores of the first part is too less to completely cover the surface of the pores of the first part, and the lithiophilic effect is insignificant. In the technical solution of the embodiment of the present application, the first part of the porous three-dimensional framework is controlled to be impregnated in the corrosive liquid for 1-60 min, and under a circumstance that the thickness gradient of the lithiophilic substance in the current collector is ensured in the direction from the separator side to the electrode side, the lithiophilic effect is more significant.

According to some more preferred embodiments of the present application, the first part of the porous three-dimensional framework is placed to be impregnated in the corrosive liquid for 5-20 min.

After the first part of the lithiophilic porous three-dimensional framework is placed in the corrosive liquid to be impregnated, the corrosive liquid on a sample may be further washed with, but not limited to, absolute ethanol, and specifically, the corroded sample may be placed in a cleanout fluid such as absolute ethanol to be impregnated for about 5 min.

After the sample is cleaned, the sample may be dried using an oven or natural drying method.

Other technical features of the method for preparing the current collector are completely identical to those of the current collector described above, which will not be described in detail here.

According to some embodiments of the present application, the present application provides an electrode plate, including the current collector as described above or the current collector prepared by the method for preparing the current collector as described above.

According to some embodiments of the present application, the present application provides a secondary battery, including an anode plate, a cathode plate, and a separator, where the separator is provided between the anode plate and the cathode plate, the anode plate is the positive electrode as described above, a first part of a current collector in the anode plate is close to the separator, and a second part is away from the separator.

The thickness of the lithiophilic substance in the current collector increases gradually in the direction from the separator to the current collector. The secondary battery may be the battery 100 or the battery cell 20 as described above.

The secondary battery includes a cathode plate, an anode plate, an electrolyte, and a separator. In the charge-discharge process of the battery, active ions are intercalated and deintercalated to and from between the cathode plate and the anode plate. The electrolyte plays a role of conducting ions between the anode plate and the cathode plate. The separator is disposed between the cathode plate and the anode plate, to mainly prevent the cathode plate and the anode plate from being short-circuited and allow the ions to pass through.

The cathode plate includes a cathode current collector and a cathode film disposed on the cathode current. For example, the cathode current collector has two surfaces opposite in its own thickness direction, and the cathode film layer may be disposed on either one or both of the two opposite surfaces of the cathode current collector.

The cathode film includes a cathode active substance. The specific type of the cathode active substance is not limited specifically, and may be selected according to a requirement. Preferably, the cathode active substance includes one or more of lithium cobaltate (LiCoO₂), lithium nickelate (LiNiO₂), lithium iron phosphate (LiFePO₄), lithium cobalt phosphate (LiCoPO₄), lithium manganese phosphate (LiMnPO₄), lithium nickel phosphate (LiNiPO₄), lithium manganate (LiMnO₂), a binary material LiNixA₍₁₋ₓ₎O₂ (A is selected from one of Co and Mn, 0<x<1), a ternary material LiNiₘBₙC₍₁₋ₘ₋ₙ)O₂(B and C are independently selected from at least one of Co, Al, and Mn), and B and C are different, 0<m<1, 0<n<1), a doped and/or coated modified material thereof.

The cathode film may optionally include a binder. The specific type of the binder is not limited specifically and may be selected according to a requirement.

As an example, the binder may include at least one or more of polyvinylidene fluoride (PVDF), polytetrafluoroethylene (PTFE), polyacrylic acid (PAA), polyvinyl alcohol (PVA), sodium alginate (SA), polymethylacrylic acid (PMAA), and carboxymethyl chitosan (CMCS).

The cathode film may optionally include a conductive agent. The specific type of the conductive agent is not limited specifically and may be selected according to a requirement.

As an example, the conductive agent may include at least one or more of graphite, superconducting carbon, acetylene black, carbon black, ketjen black, carbon dots, carbon nanotubes, graphene, and carbon nanofibers.

In some embodiments, the cathode film layer optionally further includes an ionic conductor polymer, a lithium salt, and a plasticizer. The ionic conductor polymer may be selected from one or more of polyethylene oxide, polyethylene terephthalate, polyimide, polyvinylidene fluoride, polymethyl methacrylate, polyacrylonitrile, polypropylene carbonate, polyvinyl chloride, vinylidene fluoride, 2-acrylamido-2-methylpropanesulfonic acid, trimethylolpropane triacrylate, hyperbranched polyacrylate, and a methyl methacrylate copolymer. The lithium salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), and lithium trifluoromethanesulfonate (LiCF₃SO₃). The plasticizer may be selected from one or more of polyethylene glycol diglycidyl ether (PEGDE), polyethylene glycol diacrylate (PEGDA), polyethylene glycol amine (PEGNH2), succinonitrile(SN), triethyl phosphate (TEP), fluoroethylene carbonate (TEP), dimethyl ether (DME), diethyl carbonate (DEC), ethylene carbonate (EC), and phthalate esters.

The anode plate includes the current collector as described above. In some embodiments, the anode plate further includes an anode film layer disposed on the surface of the current collector, and the anode film layer includes an anode active substance. The anode active substance include, but is not limited to, graphite, intermediate phase carbon microbeads, soft/hard carbon, amorphous carbon, lithium titanate, a silicon-carbon alloy, and the like.

In some embodiments, the anode film layer optionally further includes a binder. As an example, the binder includes, but is not limited to, butadiene styrene rubber (SBR).

In some embodiments, the anode film layer further optionally includes a conductive agent. As an example, the conductive agent may include at least one of superconducting carbon, acetylene black, carbon black, ketjen black, carbon dots, carbon nanotubes, graphene, and carbon nanofibers.

In some embodiments, the anode film layer further optionally includes an additive such as a thickener. As an example, the thickener may be, but is not limited to, sodium carboxymethyl cellulose (CMC).

It may be understood that, in some embodiments, the secondary battery may also be a cathode-free secondary battery, in which case the anode plate does not include an anode active substance and the anode plate is the current collector.

The electrolyte may be at least one of a liquid electrolyte (i.e., electrolyte solution) and a solid electrolyte.

In some optional embodiments, the electrolyte is an electrolyte solution. The electrolyte solution includes an electrolyte salt and a solvent.

In some embodiments, an electrolyte salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiCF₃SO₃), lithium difluoro(oxalato)borate (LiDFOB), lithium dioxalate borate (LiBOB), lithium difluorophosphate (LiPO₂F₂), lithium difluorodioxalate phosphate (LiDFOP), and lithium tetrafluorooxalate phosphate (LiTFOP).

In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), and butylene carbonate (BC).

In some preferred embodiments, the electrolyte includes a solid electrolyte. The solid electrolyte is typically disposed in the form of a solid electrolyte film between the anode plate and the cathode plate. The solid electrolyte film may be selected from one or more of an inorganic solid electrolyte film, a solid polymer electrolyte film, and an inorganic-organic composite solid electrolyte film. The use of the solid electrolyte film is advantageous for reducing the thickness of the battery while there is no risk of leakage compared to the electrolyte. In these embodiments, the secondary battery is an all-solid battery or a semi-solid battery.

According to some embodiments of the present application, an embodiment of the present application provides an electric device, including the secondary battery provided in any one of the above embodiments, where the secondary battery is configured to provide electrical energy to the electric device.

The electric device may be any one of the above devices or systems using the secondary battery.

The preparation process and test data are described below:

### Example 1:

Preparation of a current collector:
step (S1): a lithiophilic substance Sn with a thickness of 0.05 µm was plated in pores of foamed Cu with a thickness of 150 µm to obtain lithiophilic foamed Cu, the foamed Cu including a first side and a second side facing away from the first side, the first side being used to face the separator, and in a direction from the first side to the second side, the foamed Cu including a first part and a second part;
step (S2): the first part of the lithiophilic foamed cupper obtained in step (S1) was placed in a petri dish containing a corrosive liquid containing 6mol/L nitric solution to be impregnated for 1 min, where the height of the corrosive liquid was 5 µm, so that the thickness of the first lithiophilic substance layer in the pores of the first part was less than the thickness of the second lithiophilic substance layer in the pores of the second part, to obtain a first sample;
step (S3): the first sample in step (S2) was taken out and soaked in absolute ethyl alcohol for 5 min to obtain a second sample; and
Step (S4): the second sample obtained in step (S3) was placed in an oven at 60 °C and dried for 10 min to obtain a gradient lithiophilic three-dimensional current collector.

FIG. 5 is a schematic cross-sectional view of the current collector 40 prepared in Example 1. The current collector 40 includes a porous three-dimensional framework 402, the thickness of the lithiophilic substance 404 is distributed in gradient in the current collector 40, and the thickness of the first lithiophilic substance layer closer to the separator side (the first part) is less than the thickness of the second lithiophilic substance layer farther from the separator side (the second part).

Assembly of the three-dimensional current collector/Li half cell and discharge performance test:

A button-type half cell was assembled, where the anode of the battery was the gradient lithiophilic three-dimensional current collector obtained in Example 1 and the cathode was a lithium plate, the electrolyte was dissolved in DME with 1M LiFSI, and the separator was a 12 µm PE film.

Discharge condition: the button-type half cell was discharged at a constant current at room temperature, where the current density was 1mA/cm², and the battery was continuously discharged till a short-circuit signal appeared, that is, the voltage of the battery jumped to 0V.

The time from the start of discharge to short circuit was recorded.

### Full battery assembly of the LFP/three-dimensional current collector and cycle performance test:

Assembly of a button-type full cell: the anode of the full cell was lithium iron phosphate, where the mass ratio of lithium iron phosphate, conductive carbon black, and a PVDF binder was 8: 1: 1, the cathode was the gradient lithiophilic three-dimensional current collector obtained in Example 1, the electrolyte was dissolved in DEM with 1 M LiFSI, and the separator was a 12 µm PE film.

Charging condition: the full cell was charged at room temperature by means of a constant curent-constant voltage mode (CC-CV mode). First, the battery was charged at a constant rate of 0.2C till the voltage was increased to 3.65 V in the constant current mode, and then switched to the constant voltage mode with a cutoff current of 0.05C to fully charge the full cell.

Discharge condition: the battery was discharged at a discharge rate of 0.5C in a constant current mode till the voltage was 2V and 200 cycles were performed.

The number of cycles at which the discharge capacity retention rate was 50% was recorded.

### Example 2:

The difference between Examples 2-3 and Example 1 only lies in that the thickness of the lithiophilic substance Sn is different, and other conditions all are the same, specifically shown in Table 1.

### Example 4:

The difference between Example 4 and Example 2 only lies in that the used corrosive liquid is different, and other conditions all are the same, specifically shown in Table 1.

### Example 5-7:

The difference between Examples 5-7 and Example 2 only lies in that the soaking time of the lithiophilic foamed copper in the corrosive liquid is different, and other conditions all are the same, specifically shown in Table 1.

### Example 8-10:

The difference between Examples 8-10 and Example 5 only lies in that the height of the corrosive liquid is different, and other conditions all are the same, specifically shown in Table 1.

### Example 11-14:

The difference between Examples 11-14 and Example 9 only lies in that the lithiophilic substance is different, and other conditions all are the same, specifically shown in Table 1.

### Comparative example 1:

The current collector is blank foamed copper without any lithiophilic substance deposited.

### Comparative examples 2-6:

Different lithiophilic substances were used, respectively, and the lithiophilic substance was not subjected to gradient treatment.

The thickness of the three-dimensional current collector lithiophilic layer was tested, where the lithiophilic layer might be a first lithiophilic substance layer or a second lithiophilic substance layer:
the cross-section of the three-dimensional current collector was observed with a scanning electron microscope, and the thickness of the lithiophilic layer from the surface to the inside was measured.

Sample preparation: a three-dimensional current collector sample of 5 mm×5 mm×0.12 mm was taken and fixed on a silicon wafer support layer having an area of 5 mm×4 mm, and the cross section of the three-dimensional current collector was bombarded with an ion beam polishing instrument (model: Leica EM TIC3X), an ion gun was perpendicular to the cross section of the three-dimensional current collector, and the polishing efficiency was 2h/mm, a complete and flat truncated observation surface was obtained, and the cross-sectional sample was obtained.

Observation: the cross-sectional sample prepared above was placed in a sample chamber of a scanning electron microscope (model: Phenom PrOx), waiting for the sample chamber to be vacuumized; an electron beam switch was turned on, and the accelerating voltage was 10-20 kV; and the upper surface of the three-dimensional current collector was taken and observed at longitudinal depths of 50 µm and 120 µm, respectively, with 3 points taken at each depth to obtain the average value of the thickness of the lithiophilic layer.

Assembly of the three-dimensional current collector/Li half cell and discharge performance test:

Button-type half batteries were assembled, where the anodes of the batteries were the three-dimensional current collectors obtained in Examples 1-14 and Comparative examples 1-6, the cathodes were lithium plates, the electrolyte was dissolved in DEM with 1M LiFSI, and the separator was a 12 µm PE film.

Discharge condition: the button-type half cell was discharged at a constant current at room temperature, where the current density was 1mA/cm², and the battery was continuously discharged till a short-circuit signal appeared, that is, the voltage of the battery jumped to 0V.

The time from the start of discharge to short circuit was recorded.

### Full battery assembly of the LFP/three-dimensional current collector and cycle performance test:

Assembly of a button-type full cell: the anode of the full cell was lithium iron phosphate, where the mass ratio of lithium iron phosphate, conductive carbon black, and a PVDF binder was 8: 1: 1, the cathodes were the three-dimensional current collectors obtained in Examples 1-14 and Comparative examples 1-6 respectively, the electrolyte was dissolved in DEM with 1 M LiFSI, and the separator was a 12 µm PE film.

Charging condition: the full cell was charged at room temperature by means of a constant curent-constant voltage mode (CC-CV mode). First, the battery was charged at a constant rate of 0.2C till the voltage was increased to 3.65 V in the constant current mode, and then switched to the constant voltage mode with a cutoff current of 0.05C to fully charge the full cell.

Discharge condition: the battery was discharged at a discharge rate of 0.5C in a constant current mode till the voltage was 2V and 200 cycles were performed.

The number of cycles at which the discharge capacity retention rate was 50% was recorded.

**Table 1: Current collector parameters and battery performance parameters in Examples and Comparative examples**

| Sample number | Lithiophilic substance | Thickness of second lithiophilic substance layer/µm | Corrosive liquid | Impregnation time/min | Height of corrosive liquid/µm | Thickness of first lithiophilic substance layer/µm | (Current collector/Li half cell) short-circuit time/h | 50% capacity retention cycles of full cell cycle (LFP/current collector) |
|---|---|---|---|---|---|---|---|---|
| Example 1 | Sn | 0.05 | Nitric acid | 1 | 5 | 0.02 | 62 | 15 |
| Example 2 | Sn | 0.5 | Nitric acid | 1 | 5 | 0.12 | 123 | 35 |
| Example 3 | Sn | 1 | Nitric acid | 1 | 5 | 0.35 | 81 | 24 |
| Example 4 | Sn | 0.5 | Hydrochlori c acid | 1 | 5 | 0.24 | 103 | 30 |
| Example 5 | Sn | 0.5 | Nitric acid | 10 | 5 | 0.016 | 145 | 52 |
| Example 6 | Sn | 0.5 | Nitric acid | 30 | 5 | 0.008 | 133 | 38 |
| Example 7 | Sn | 0.5 | Nitric acid | 60 | 5 | 0.005 | 132 | 36 |
| Example 8 | Sn | 0.5 | Nitric acid | 10 | 10 | 0.012 | 154 | 60 |
| Example 9 | Sn | 0.5 | Nitric acid | 10 | 30 | 0.01 | 166 | 74 |
| Example 10 | Sn | 0.5 | Nitric acid | 10 | 50 | 0.008 | 155 | 65 |
| Example 11 | Zn | 0.5 | Nitric acid | 10 | 30 | 0.012 | 157 | 60 |
| Example 12 | Mg | 0.5 | Nitric acid | 10 | 30 | 0.014 | 152 | 58 |
| Example 13 | Graphite | 0.5 | Nitric acid | 10 | 30 | 0.018 | 150 | 56 |
| Example 14 | CuO | 0.5 | Nitric acid | 10 | 30 | 0.008 | 143 | 42 |
| Comparative example 1 | / | / | / | / | / | / | 17 | 9 |
| Comparative example 2 | Sn | 0.5 | / | / | / | / | 20 | 14 |
| Comparative example 3 | Zn | 0.5 | / | / | / | / | 18 | 10 |
| Comparative example 4 | Mg | 0.5 | / | / | / | / | 18 | 10 |
| Comparative example 5 | Graphite | 0.5 | / | / | / | / | 17 | 8 |
| Comparative example 6 | CuO | 0.5 | / | / | / | / | 15 | 8 |

The results of Examples 1-12 compared with Comparative example 1 in Table 1 show that compared with the blank foamed copper, the short-circuit time of the half cell in the gradient lithiophilic foamed copper current collector is longer and the 50% capacity retention cycles of the full cell are more, indicating that the gradient lithiophilic foamed copper current collector provided by the present application realizes short-circuit suppression of the half cell, and the cycle performance of the full cell is improved.

The results where Examples 1-10 are compared with Comparative example 2, Example 11 is compared with Comparative example 3, and Example 12 is compared with Comparative example 4 in Table 1 show that the foamed copper containing the lithiophilic substance must be subjected to gradient treatment to significantly suppress the short circuit, and improves the cycle performance of the full cell.

The results of Examples 1-3 in Table 1 show that compared with the thickness of the second lithiophilic substance layer which is 0.05 µm and 1 µm and the thickness of the second lithiophilic substance layer which is 0.5 µm, the lithiophilic effect is exerted best, so that the short-circuit suppression performance and the cycle performance of the full cell both are improved.

The result comparison between Example 2 and Example 4 in Table 1 shows that nitric acid serving as the corrosive liquid is better than hydrochloric acid in effect and more significantly improves the electrochemical performance of the battery.

The result comparison among Example 2 and Examples 5-7 shows that in a case that the impregnation time of the lithiophilic foamed copper is 10 min, the short-circuit suppression performance of the half cell and the cycle performance of the full cell are the best.

The result comparison among Examples 8-10 shows that in a case that the height of the corrosive liquid in a container is 30 µm, the effect is the best, i.e., in a case that the height of the corrosive liquid in a container is 30 µm, the short-circuit suppression performance of the half cell and the cycle performance of the full cell are the best.

The result comparison among Examples 9, 11, and 12 show that in a case that the lithiophilic substance is Sn, the short-circuit suppression performance of the half cell and the cycle performance of the full cell are the best, indicating that the gradient lithiophilic improvement effect of Sn is superior to that of Zn and Mg.

The result comparison between Example 13 and Comparative example 5 shows that in a case that the lithiophilic substance is a carbon-based material graphite, performing thickness gradient design of graphite may significantly improve the electrochemical performance of the battery.

The result comparison between Example 14 and Comparative example 6 shows that in a case that the lithiophilic substance is an oxide CuO, performing thickness gradient design of CuO may significantly improve the electrochemical performance of the battery.

By integrating the test results in Table 1, it may be known that Example 9 is the optimal example. The porous three-dimensional framework is the 150 µm thick foamed copper, the lithiophilic substance is Sn, the initial thickness of the lithiophilic substance (the thickness of the second lithiophilic substance layer in the second part of the foamed cupper) is 0.5 µm, the impregnation time of the first part of the foamed copper is 10 min, the height of the corrosive liquid nitric acid is 30 µm, the thickness of the first lithiophilic substance layer is 0.01 µm, the mass proportion of the lithiophilic substance Sn in the first part of the current collector (close to the separator side) is 0.5%, and the mass proportion of the lithiophilic substance Sn in the second part of the current collector (close to the electrode side) is 99.5%.

As can be seen from the comparison between the above Examples and Comparative examples, by disposing the lithiophilic substance in the pores of the porous three-dimensional framework, the nucleation overpotential of lithium on the surface of the porous three-dimensional framework can be reduced, the active sites can be increased, the diffusion capability of lithium atoms on the surface of the porous three-dimensional framework can be improved, the localized nucleation deposition of lithium metal can be avoided, the formation of dendrites can be suppressed, and the cycle performance and safety of the secondary battery can be improved. Moreover, in the direction from the separator side to the electrode side, the mass proportion of the lithiophilic substance in the current collector close to the separator side is less than the mass proportion of the lithiophilic substance in the current collector close to the electrode side, and the thickness of the lithiophilic substance in the current collector increases in gradient from the separator side to the electrode side, which may induce the lithium metal to be preferentially deposited in the porous three-dimensional framework, the pores of the three-dimensional current collector are fully used, the infinite volume expansion of the deposited lithium is limited, and the safety of the secondary battery is further improved.

Although this application has been described with reference to some preferred embodiments, various modifications to this application and replacements of the components therein with equivalents can be made without departing from the scope of this application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A current collector, comprising a porous three-dimensional framework and a lithiophilic substance, wherein the lithiophilic substance is distributed in pores of the porous three-dimensional framework, and the mass proportion of the lithiophilic substance in the current collector on the side close to a separator is less than the mass proportion of the lithiophilic substance in the current collector on the side close to an electrode.

2. The current collector according to claim 1, wherein the lithiophilic substance is distributed in the pores of the porous three-dimensional framework; the current collector comprises a first side used to face the separator, and a second side facing away from the first side; and in a direction from the first side to the second side, the porous three-dimensional framework comprises a first part and a second part, a first lithiophilic substance layer is provided in the pores of the first part of the three-dimensional framework, a second lithiophilic substance layer is provided in the pores of the second part of the three-dimensional framework, and the thickness of the first lithiophilic substance layer is less than the thickness of the second lithiophilic substance layer.

3. The current collector according to claim 2, wherein the thickness of the second lithiophilic substance layer is greater than or equal to 50 nm and less than or equal to 1 µm, preferably 50-60 nm.

4. The current collector according to claim 2 or 3, wherein the thickness of the first lithiophilic substance layer is greater than 0 nm and less than 1 µm, preferably 8-12 nm.

5. The current collector according to any one of claims 2 to 4, wherein the thickness of the first lithiophilic substance layer is d1, the thickness of the second lithiophilic substance layer is d2, and a range of d1 is greater than 0 and less than or equal to d2*50%.

6. The current collector according to any one of claims 1 to 5, wherein
in the direction from the first side to the second side, a height of the first part is h1, a height of the current collector is h, and a range of h1 is greater than 5 µm and less than or equal to h*50%.

7. The current collector according to any one of claims 1 to 6, wherein the lithiophilic substance comprises at least one of a metal capable of forming an alloy with lithium, a metal alloy capable of forming an alloy with lithium, a metal capable of forming a solid solution with lithium, a metal alloy capable of forming a solid solution with lithium, silicon (Si), a carbon-based material, or an oxide.

8. The current collector according to claim 7, wherein the metal comprises at least one of Sn, Mg, Zn, Bi, Pb, Au, Ag, Al, In, and Ga; the metal alloy comprises at least two of Sn, Mg, Zn, Bi, Pb, Au, Ag, Al, In, and Ga; the carbon-based material comprises at least one of graphite, graphene, graphdiyne, and hard carbon; and the oxide comprises at least one of Cu₂O, CuO, ZnO, MgO, and graphene oxide.

9. The current collector according to claim 7 or 8, wherein the metal comprises at least one of Sn, Mg, and Zn, and the metal alloy comprises at least two of Sn, Mg, and Zn.

10. The current collector according to any one of claims 1 to 9, wherein a loading capacity of the lithiophilic substance in the pores of the porous three-dimensional framework is greater than or equal to 0.3g/m² and less than or equal to 60 g/m².

11. The current collector according to any one of claims 1 to 10, wherein the porous three-dimensional framework comprises a porous three-dimensional metal framework.

12. The current collector according to claim 11, wherein a material of the porous three-dimensional metal framework comprises at least one of Cu, Ni, Ti, Mg, and Al.

13. The current collector according to any one of claims 1 to 12, wherein a porosity of the porous three-dimensional metal framework is 60-90%.

14. A method for preparing the current collector according to any one of claims 1 to 13, comprising:
providing a porous three-dimensional framework, wherein the porous three-dimensional framework comprises a first side used to face a separator and a second side facing away from the first side; and
forming a lithiophilic substance on the porous three-dimensional framework, wherein in a direction from the first side to the second side, the obtained lithiophilic porous three-dimensional framework comprises a first part and a second part, and the thickness of a first lithiophilic substance layer in pores of the first part is less than the thickness of a second lithiophilic substance layer in pores of the second part.

15. The method for preparing the current collector according to claim 14, comprising:
placing the first part of the lithiophilic porous three-dimensional framework in a corrosive liquid to be impregnated, such that the thickness of the first lithiophilic substance layer in the pores of the first part is less than the thickness of the second lithiophilic substance layer in the pores of the second part, so as to obtain the current collector containing the lithiophilic substance.

16. The method for preparing the current collector according to claim 15, wherein the corrosive liquid comprises at least one of nitric acid or hydrochloric acid.

17. The method for preparing the current collector according to claim 15 or 16, wherein the first part of the porous three-dimensional framework is placed in the corrosive liquid to be impregnated for 1 to 60 min.

18. An electrode plate, comprising the current collector according to any one of claims 1 to 13 or the current collector prepared by the method for preparing the current collector according to any one of claims 14 to 17.

19. A secondary battery, comprising an anode plate, a cathode plate, and a separator, wherein the separator is provided between the anode plate and the cathode plate, the anode plate is the anode plate according to claim 18, a first part of a current collector in the anode plate is close to the separator, and a second part is away from the separator.

20. An electric device, comprising the secondary battery according to claim 19.
